(19) Europäisches Patentamt
European Patent Office
Office européen des brevets

(11) Veröffentlichungsnummer: **0 128 350**
**B1**

(12) # EUROPÄISCHE PATENTSCHRIFT

(45) Veröffentlichungstag der Patentschrift: **25.11.87**

(51) Int. Cl.[4]: **C 07 F 9/65,** A 01 N 57/16, A 01 N 57/32

(21) Anmeldenummer: **84105133.7**

(22) Anmeldetag: **07.05.84**

(54) **Pyrimidylphosphorsäure-Derivate und ihre Verwendung als Schädlingsbekämpfungsmittel.**

(30) Priorität: **17.05.83 DE 3317824**

(43) Veröffentlichungstag der Anmeldung: **19.12.84 Patentblatt 84/51**

(45) Bekanntmachung des Hinweises auf die Patenterteilung: **25.11.87 Patentblatt 87/48**

(84) Benannte Vertragsstaaten: **AT BE CH DE FR GB IT LI NL**

(56) Entgegenhaltungen:
**EP-A-0 009 566**
**FR-A-2 365 577**
**US-A-4 429 125**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Maurer, Fritz, Dr., Roeberstrasse 8, D-5600 Wuppertal 1 (DE)**
Erfinder: **Homeyer, Bernhard, Dr., Obere Strasse 28, D-5090 Leverkusen 3 (DE)**
Erfinder: **Becker, Benedikt, Dr., Metzkausenerstrasse 14, D-4020 Mettmann (DE)**

EP 0 128 350 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft neue Pyrimidin-5-yl-thionophosphorsäureester, ein Verfahren zu ihrer Herstellung und ihre Verwendung in Schädlingsbekämpfungsmitteln, insbesondere als Arthropozide.

Es ist bekannt, daß bestimmte Thionophosphorsäure-ester bzw. -esteramide, wie z. B. 0,0-Diethyl-0-(2-i-propyl-pyrimidin-5-yl)- und 0-Ethyl-0-n-propyl-0-(2-i-propylpyrimidin-5-yl)- und 0-Ethyl-0-n-propyl-0-(2-i-propylpyrimidin-5-yl)-thionophosphorsäureester bzw. 0-Ethyl-0-(2-i-propyl-pyrimidin-5-yl)-N-iso-propylthionophosphorsäureesteramid, insektizid wirksam sind (vgl. DE-A-26 43 262).

Die Wirkung und die Wirkungsdauer dieser Verbindungen sind jedoch, insbesondere, bei bestimmten Insekten und Milben, nicht immer voll zufriedenstellend.

Es wurden nun neue Pyrimidin-5-yl-thionophosphorsäureester der Formel (I) gefunden,

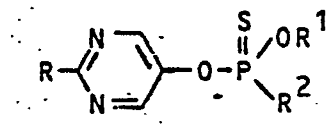

(I)

in welcher
R für i-Propyl oder t-Butyl steht,
$R^1$ für Ethyl oder i-Propyl steht und
$R^2$ für i-Propoxy-, sec.-Butoxy oder Ethylamino steht.

Weiterhin wurde gefunden, daß man die neuen substituierten Pyrimidin-5-yl-thionophosphorsäureester der Formel (I) erhält, wenn man 5-Hydroxypyrimidine der Formel (II),

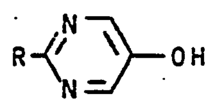

(II)

in welcher
R die oben angegebene Bedeutung hat,
oder die entsprechenden Alkalimetall-, Erdalkalimetall- oder Ammoniumsalze mit Halogeniden der Formel (III),

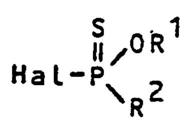

(III)

in welcher
$R^1$ und $R^2$ die oben angegebenen Bedeutungen haben und
Hal für Halogen, wie Chlor oder Brom steht,

gegebenenfalls in Gegenwart eines Säureakzeptors und gegebenenfalls in Gegenwart eines Verdünnungsmittels umsetzt.

Die neuen Pyrimidin-5-yl-thionophosphorsäureester der Formel (I) zeichnen sich in überragender Weise durch eine besonders hohe und lange Wirksamkeit als Schädlingsbekämpfungsmittel, insbesondere als Arthropozide aus.

Verwendet man beispielsweise für das erfindungegemäße Verfahren 0-Ethyl-0-isopropyl-thionophosphorsäurediesterchlorid und 5-Hydroxy-2-isopropyl-pyrimidin als Ausgangsstoffe, so kann die entsprechende Reaktion durch das folgende Formelschema skizziert werden:

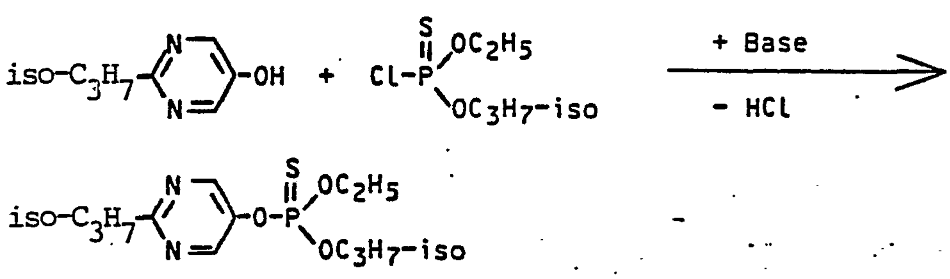


Die beim erfindungsgemäßen Verfahren als Ausgangsstoffe für die Herstellung der neuen Verbindungen der Formel (I) einzusetzenden 5-Hydroxypyrimidine bzw. die entsprechenden Alkalimetall-, Erdalkalimetall- oder Ammoniumsalze sind durch die Formel (II) definiert. In dieser Formel steht R für diejenigen Reste, welche oben bei der Definition in Formel (I) angegeben sind. Als Alkali- oder Erdalkalimetallsalze werden vorzugsweise die

Natrium-, Kalium- oder Calciumsalze eingesetzt.

Die Verbindungen der Formel (II) sind bekannt und/oder können nach allgemein bekannten Verfahren und Methoden hergestellt werden (vgl. z. B. DE-OS 26 43 262, DE-OS 27 06 127 und J.Chem.Soc. 1960, 4590).

Als Verbindungen der Formel (II) seien genannt:

2-i-Propyl- und

2-tert.-Butyl-5-hydroxypyrimidin

bzw. die entsprechenden Natrium-, Kalium-, Calcium- und Ammoniumsalze.

Die außerdem als Ausgangsstoffe einzusetzenden Halogenide sind durch die Formel (III) definiert. In dieser Formel stehen $R^1$ und $R^2$ fur diejenigen Reste, welche bei der Definition in Formel (I) angegeben sind. Hal steht in dieser Formel für Halogen, wie insbesondere Chlor oder Brom.

Die Verbindungen der Formel (III) sind bekannt.

Als Beispiele für die Halogenide der Formel (III) seien genannt:

0-Ethyl-0-iso-propyl-, 0-Ethyl-0-sec.-butyl-, 0,0-Di-isopropyl- und 0-sec.-Butyl-0-iso-propyl-thionophosphorsäureester-chlorid bzw. -bromid;

0-Ethyl-N-ethyl- und 0-i-Propyl-N-ethyl-thionophosphorsäureesteramid-chlorid bzw. -bromid.

Das erfindungsgemäße Verfahren zur Herstellung der neuen Pyrimidin-5-yl-thionophosphorsäureester der Formel (I) wird bevorzugt unter Verwendung von Verdünnungsmitteln durchgeführt. Als Verdünnungsmittel kommen praktisch alle inerten organischen Lösungsmittel infrage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol o-Dichlorbenzol, Ether wie Diethyl- und Dibutylether, Glycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z. B. Acetonitril und Propionitril, Amide, wie z.B. Dimethylformamid, Dimethylacetamid und N-Methylpyrrolidon, sowie Dimethylsulfoxid, Tetramethylensulfon und Hexamethyl-phosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen 0°C und 100°C durchgeführt. Bevorzugt wird der Bereich zwischen 20°C und 80°C. Die Umsetzungen werden im allgemeinen bei Normaldruck durchgeführt.

Zur Durchführung des erfindungsgemäßen Verfahrens werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel, z. B. Toluol zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren', d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B.. Forficula auricularia.

Aus der Ordnung der Isoptera z. B. Reticulitermes spp..

Aus der Ordnung der Anoplura z. B. Phylloxera vastatrix, Pemphigus spp., Pediculus humanus corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex

lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Ädes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp..

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Suspensionen, Pulver, Schäume, Pasten, Granulate, Ärosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Ärosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen,

Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Das erfindungsgemäße Verfahren soll anhand der folgenden Herstellungbeispiele erläutert werden:

**Beispiel 1:**

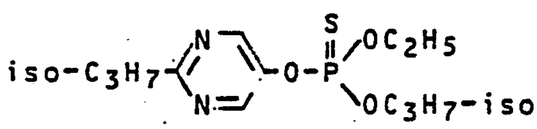

Ein Gemisch aus 300 ml Acetonitril, 13,8 g (0,1 Mol) 5-Hydroxy-2-iso-propyl-pyrimidin, 20,7 g (0,15 Mol) Kaliumcarbonat und 20,2 g (0,1 Mol) 0-Ethyl-0-iso-propyl-thionophosphorsäurediester-chlorid wird 2 Stunden bei 45°C gerührt. Dann gießt man das Reaktionsgemisch in 400 ml Toluol und wäscht es zweimal mit je 300 ml Wasser. Die Toluollösung wird über Natriumsulfat getrocknet und im Vakuum eingedampft. Den Rückstand destilliert man im Hochvakuum an.

Man erhält so 28 g (92 % der Theorie) 0-Ethyl-0-iso-propyl-0-(2-iso-propyl-pyrimidin-5-yl)-thionophosphorsäureester in Form eines gelben Öles mit dem Brechungsindex $n^{23}_D$:1,4910.

In analoger Weise können die folgenden Verbindungen der Formel

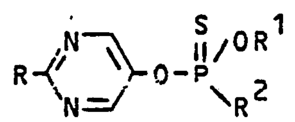

(I)

hergestellt werden:

| Beisp. Nr. | R | $R^1$ | $R^2$ | Brechungsindex |
|---|---|---|---|---|
| 2 | $-C_3H_7$-iso | $-C_3H_7$-iso | $-OC_3H_7$-iso | $n^{20}_D$ : 1,4869 |
| 3 | $-C_4H_9$-tert. | $-C_2H_5$ | $-OC_3H_7$-iso | $n^{20}_D$ : 1,4917 |
| 4 | $-C_3H_7$-iso | $-C_2H_5$ | $-OC_4H_9$-sec. | $n^{20}_D$ : 1,4960 |
| 5 | $-C_4H_9$-tert. | $-C_2H_5$ | $-OC_4H_9$-sec. | $n^{22}_D$ : 1,4935 |
| 6 | $-C_4H_9$-tert. | $-C_3H_7$-iso | $-OC_3H_7$-iso | $n^{22}_D$ : 1,4857 |
| 7 | $-C_4H_9$-tert. | $-C_2H_5$ | $-NHC_2H_5$ | $n^{21}_D$ : 1,5100 |

Die biologische Wirksamkeit der erfindungsgemäßen Verbindungen. soll anhand der folgenden Beispiele erläutert werden:

**Beispiel A**

Wirkungsdauer-Test / Bodeninsekten

Testinsekt: Phorbia antiqua-Maden

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20° C stehen.

Im Abstand von 2 Wochen werden nach vorheriger erneuter Durchmischung Bodenproben von 250 ccm entnommen und in den behandelten Boden die entsprechenden Testinsekten gesetzt. Nach weiteren 2 bis 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie in der unbehandelten Kontrolle.

Bei diesem Test zeigen z. B. bei einer Wirkstoffkonzentration von 2,5 ppm die folgenden Verbindungen der Herstellungsbeispiele (1), (3) und (7) nach 5 Wochen eine Abtötung von 100 %.

**Beispiel B**

Drosophila-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf eine Filterpapierscheibe (7 cm Durchmesser) aufpipettiert. Man legt diese naß auf die Öffnung eines Glasgefäßes, in dem sich 50 Taufliegen (Drosophila melanogaster) befinden und bedeckt es mit einer Glasplatte.

Nach der gewünschten Zeit bestimmt man die Abtötung in %. Dabei bedeutet 100 %, daß alle Fliegen abgetötet wurden; 0 % bedeutet, daß keine Fliegen abgetötet wurden.

Bei diesem Test zeigen z. B. bei einer Wirkstoffkonzentration von 0,01 % die folgenden Verbindungen der Herstellungsbeispiele (1), (2), (3), (4), (5), (6) und (7) nach einem Tag eine Abtötung von 100 %.

**Beispiel C**

Plutella-Test

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigen z. B. bei einer Wirkstoffkonzentration von 0,1 % die folgenden Verbindungen der Herstellungsbeispiele (1), (2), (3), (4), (5), (6) und (7) nach 3 Tagen eine Abtötung von 100 %.

**Beispiel D**

Tetranychus-Test (resistent)

Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigen z. B. bei einer Wirkstoffkonzentration von 0,1 % die folgenden Verbindungen der Herstellungsbeispiele (1) und (7) nach 2 Tagen eine Abtötung von 100 %.

**Patentansprüche**

1. Pyrimidin-5-yl-thionophosphorsäureester der Formel (I)

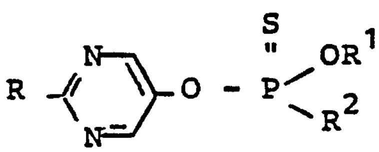

(I)

in welcher
R für i-Propyl oder t-Butyl steht,
$R^1$ für Ethyl oder i-Propyl steht und
$R^2$ für i-Propoxy-, sec.-Butoxy oder Ethylamino steht.

2. Verfahren zur Herstellung von Pyrimidin-5-yl-thionophosphorsäureestern der Formel (I)

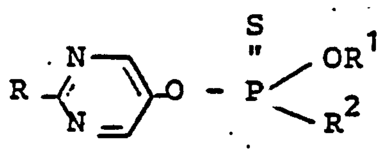

(I)

in welcher
R für i-Propyl oder t-Butyl steht,
$R^1$ für Ethyl oder i-Propyl steht und
$R^2$ für i-Propoxy-, sec.-Butoxy oder Ethylamino steht,

dadurch gekennzeichnet, daß man 5-Hydroxypyrimidine der Formel (II),

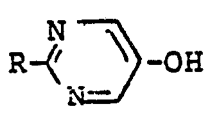

(II)

in welcher
R die oben angegebene Bedeutung hat,

oder die entsprechenden Alkalimetall-, Erdalkalimetall- oder Ammoniumsalze mit Halogeniden der Formel (III),

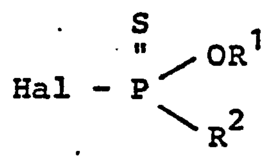

(III)

in welcher
$R^1$ und $R^2$ die oben angegebene Bedeutung haben und
Hal für Halogen, wie Chlor oder Brom steht,

gegebenenfalls in Gegenwart eines Säureakzeptors und gegebenenfalls in Gegenwart eines Verdünnungsmittels umsetzt.

3. Schädlingsbekämpfungsmittel, gekennzeichnet durch einen Gehalt an mindestens einer Verbindung der Formel (I) gemäß Anspruch 1 oder 2.

4. Verwendung von Verbindungen der Formel (I) gemäß Anspruch 1 oder 2 zur Bekämpfung von Schädlingen, insbesondere Insekten und Akariden.

5. Verfahren zur Bekämpfung von Schädlingen, dadurch gekennzeichnet, daß man Verbindungen der Formel (I) gemäß Anspruch 1 oder 2 auf die Schädlinge, vorzugsweise Insekten und Akariden oder ihren Lebensraum einwirken läßt.

6. Verfahren zur Herstellung von Schädlingsbekämpfungsmitteln, dadurch gekennzeichnet, daß man Verbindungen der Formel (I) gemäß Anspruch 1 oder 2 mit Streckmitteln und/oder oberflächenaktiven Mitteln vermischt.

**Claims**

1. Pyrimidin-5-yl thionophosphates of the formula (I)

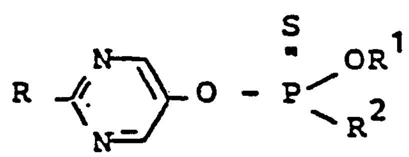

(I)

in which
R represents i-propyl or t-butyl,
$R^1$ represents ethyl or i-propyl and
$R^2$ represents i-propoxy- sec.-butoxy or ethylamino.

2. Process for the preparation of pyrimidin-5-yl thionophosphates of the formula (I)

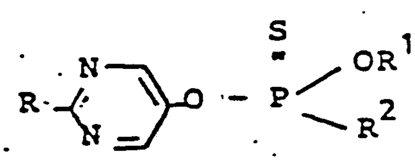

(I)

in which
R represents i-propyl or t-butyl,
$R^1$ represents ethyl or i-propyl and
$R^2$ represents i-propoxy-,sec.-butoxy or ethylamino,
characterised in that 5-hydroxypyrimidines of the formula (II),

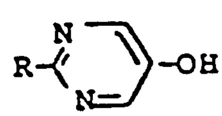

(II)

in which
R has the abovementioned meaning,
or the corresponding alkali metal, alkaline earth metal or ammonium salts, are reacted with halides of the

formula (III),

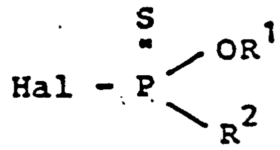 (III)

in which
$R^1$ and $R^2$ have the abovementioned meaning and
Hal represents halogen, such as chlorine or bromine,
if appropriate in the presence of an acid acceptor and if appropriate in the presence of a diluent.

3. Agents for combating pests, characterised in that they contain at least one compound of the formula (I) according to Claim 1 or 2.

4. Use of compounds of the formula (I) according to Claim 1 or 2 for combating pests, in particular insects and acarids.

5. Method of combating pests, characterised in that compounds of the formula (I) according to Claim 1 or 2 are allowed to act on the pests, preferably insects and acarids or their habitat.

6. Process for the preparation of agents for combating pests, characterised in that compounds of the formula (I) according to Claim 1 or 2 are mixed with extenders and/or surface-active agents.

**Revendications**

1. Esters pyrimidine-5-yl-thionophosporiques de formule I

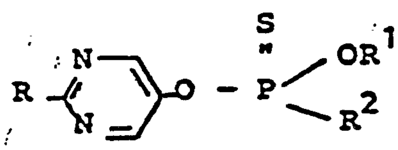 (I)

dans laquelle
R représente un groupe isopropyle ou tert.-butyle,
$R^1$ représente un groupe ethyle ou isopropyle, et
$R^2$ représente un groupe isopropoxy, sec.-butoxy ou éthylamino.

2. Procédé de préparation des esters pyrimidine-5-yl-thiono-phosphoriques de formule I

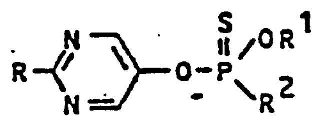 (I)

dans laquelle
R représente un groupe isopropyle ou tert.-butyle,
$R^1$ représente un groupe éthyle ou isopropyle, et
$R^2$ représente un groupe isopropoxy, sec.-butoxy ou éthylamino, caractérisé en ce que l'on fait réagir des 5-hydroxypyrimidines de formule II

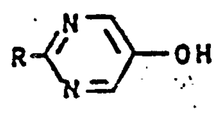 (II)

dans laquelle R a les significations indiquées ci-dessus, ou les sels de métaux alcalins, de métaux alcalino-terreux ou d'ammonium correspondants, avec des halogénures de formule III

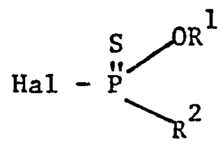

(III)

dans laquelle $R^1$ et $R^2$ ont les significations indiquées ci-dessus, et Hal représente un halogène tel que le chlore ou le brome, éventuellement en présence d'un accepteur d'acide et éventuellement en présence d'un diluant.

3. Produit pesticide, caractérisé en ce qu'il contient au moins un composé de formule I selon la revendication 1 ou 2.

4. Utilisation des composés de formule I selon la revendication 1 ou 2 dans la lutte contre les parasites, en particulier les insectes et les acariens.

5. Procédé pour combattre les parasites, caractérisé en ce que l'on fait agir des composés de formule I selon la revendication 1 ou 2 sur les parasites, de préférence des insectes et des acariens, ou leur habitat.

6. Procédé de préparation de produits pesticides, caractérisé en ce que l'on mélange des composés de formule I selon la revendication 1 ou 2 avec des diluants et/ou des agents tensioactifs.